# EUROPEAN PATENT APPLICATION

(11) **EP 4 542 742 A1**
(43) Date of publication of application: **23.04.2025**
(21) Application number: 24173978.8
(22) Date of filing: 03.05.2024
(51) Int. Cl.: H01M 50/211, H01M 50/505, H01M 50/514, H01M 50/553, H01M 50/566

(54) **BATTERY MODULE HOUSING WITH ANTI-SLIP GUIDE STRUCTURE**

(30) Priority: 18.10.2023 KR 20230139123
(71) Applicant: Hyundai Mobis Co., Ltd., Gangnam-gu Seoul 06141 (KR)
(72) Inventor: PARK, Lee Seung, 16863 Yongin-si, Gyeonggi-do (KR); JANG, Jae Young, 16944 Yongin-si, Gyeonggi-do (KR)
(74) Representative: Frenkel, Matthias Alexander

(57) **Abstract**

Provided is a battery module housing (10) with an anti-slip guide structure to prevent its product or jig from being deformed, and more particularly, to the battery module housing (10) including: an upper housing (11), a lower housing, a front housing (15), and a rear housing (15), respectively disposed on the upper, lower, front, and rear surfaces of the plurality of battery cells (1) along their peripheries, the battery cells (1) being in surface-contact with each other and arranged in one direction; a pair of side housings (13, 14) each disposed to be adjacent to and surrounding a cell lead protruding from either end of the battery cell in a length direction; and a sensing busbar assembly (100) disposed between the side housing and the cell lead, and connecting the plurality of cell leads to each other, wherein the sensing busbar assembly (100) includes a jig hole (110) into which a jig for supporting the sensing busbar assembly is configured to be inserted.

## Description

### TECHNICAL FIELD

The following disclosure relates to a battery module housing with an anti-slip guide structure to prevent its product or jig from being deformed when welding cell leads in a battery module assembly process.

### BACKGROUND

In general, in a battery module assembly process, cell leads each protruding from either end of a cell and a busbar electrically connecting the cell leads to each other may be coupled to each other by laser welding. Here, the busbar may be a structure disposed on a surface of a sensing assembly (or SNSG ASSY) disposed to be adjacent to the cell lead disposed in a battery module housing, and may face the housing. In addition, in a manufacturing and assembly process of a battery module by the laser welding between the cell lead and the sensing assembly, a pressing jig (or pusher) may press the sensing assembly in a direction in which the cell lead joins the busbar, thus bringing the busbar and the cell lead into close contact with each other, and the welding may then be performed.

In a conventional structure, the busbar may be welded using a counter bar which is a structure supports a rear surface (or an opposite surface of the busbar) of the sensing assembly. The process may be performed in such a way that a certain space is secured by inserting the counter bar between the cell lead and the busbar, the pressing jig enters using the counter bar inserted in the certain space, the cell lead and the busbar are then brought into close contact with each other while the counter bar withstands a pressing force when the pressing jig presses the cell lead, and the welding is then performed. It is thus possible to maintain an appropriate pressing force between the busbar and the cell lead by the counter bar, and secure the space necessary for the welding, thereby easily performing the manufacturing process.

However, conventionally, the certain space into which the counter bar may be inserted may exist between the cell lead and the counter bar, and the jig may preferably enter toward the counter bar in a direction parallel to the cell lead. Therefore, the jig may enter toward the counter bar in a direction of the upper or lower end of the busbar. However, it is impossible for the jig to enter the space in the direction of the upper end of the busbar because interference occurs as a wing folding part of the battery cell is formed in this space. Accordingly, the jig may conventionally enter the space only in the direction of the lower end of the busbar. That is, the jig may conventionally enter toward the counter bar from a lower part of the battery module to be inserted between the cell lead and the battery cell. However, the counter bar may only support a portion of the lower part of the battery cell. In addition, the counter bar may be inserted into the space between the cell and the lower end of the busbar, the pressing jig may then enter and press the busbar toward the battery cell to bring the cell lead into close contact with the busbar surface, and the busbar and the cell lead may then be welded to each other.

Here, in the conventional structure, the counter bar may enter only from the lower end. Therefore, when the pressing jig (or pusher) enters and presses, as there is no jig structure to support the upper part compared to the lower part, the busbar and the counter bar may be rather slipped upward by the counter bar, which results in asymmetry in a vertical direction. In addition, this asymmetry of the upper and lower spaces between the busbar and the cell lead may cause a poor welding quality and unstable dispersion, as well as damage to the battery cell as its product and counter bar are slipped backward; when the welding is performed after the slip, residual stress may occur in a welding area, which may cause poor durability; and when repeatedly using the counter bar, a continuous force may be applied to cause the deformation and damage to the product. As a result, costs may be increased due to a shorter lifespan and a shorter jig replacement cycle.

### SUMMARY

An embodiment of the present disclosure is directed to providing a battery module housing with an anti-slip guide structure to prevent its product and jig from being deformed, that is, especially in a busbar assembly which is disposed to be close to a lead part of a battery cell in relation to a housing configuring a battery module, the battery module housing with the guide structure for securing a certain space between a busbar and a cell lead while simultaneously gripping the upper and lower ends of the busbar assembly together, thus requiring no use of a separate counter bar structure, which may improve a phenomenon in which the busbar is asymmetrically slipped in a vertical direction to thus improve a quality of a melting point between the busbar and the cell lead, thereby securing its process capability.

In one general aspect, provided is a battery module housing including: an upper housing, a lower housing, a front housing, and a rear housing, respectively disposed on upper, lower, front, and rear surfaces of a plurality of battery cells along peripheries thereof, the battery cells being in surface-contact with each other and arranged in one direction; a pair of side housings each disposed to be adjacent to and surrounding a cell lead protruding from either end of the battery cell in a length direction; and a sensing busbar assembly disposed between the side housing and the cell lead, and connecting the plurality of cell leads to each other, wherein the sensing busbar assembly includes a jig hole into which a jig for supporting the sensing busbar assembly is configured to be inserted.

The jig hole may have a predetermined depth in a direction parallel to a height of the sensing busbar assembly.

The plurality of jig holes may be provided, at least one jig hole may be formed in each of the upper and lower ends of the sensing busbar assembly, and the jig holes may be spaced apart from each other by a predetermined distance in a direction vertical to a depth direction of the jig hole.

Among the plurality of jig holes, the jig holes disposed in each of the upper and lower ends of the sensing busbar assembly may be aligned in the vertical direction.

The sensing busbar assembly may include a plurality of cell lead join parts arranged to be parallel to each other in a direction vertical to the length direction, each cell lead join part being formed on a surface of the sensing busbar assembly that is in contact with the battery cell, having a predetermined length in a height direction of the sensing busbar assembly, and in surface-contact with a surface of the cell lead by protruding with a predetermined thickness.

The jig hole may protrude with a predetermined thickness in a direction corresponding to a direction in which the cell lead join part protrudes from the sensing busbar assembly.

The jig hole may be disposed in each of the upper and lower ends of the selected cell lead join part.

In the sensing busbar assembly, the protrusion thickness of the cell lead join part protruding from the surface of the sensing busbar assembly and the protrusion thickness of the jig hole may be the same as each other.

The jig hole may be disposed in each of the upper and lower ends of the cell lead join parts disposed alternately with each other among the plurality of cell lead join parts.

### BRIEF DESCRIPTION OF THE DRAWINGS

FIG. 1 is an exploded perspective view of a battery module according to an embodiment.
FIG. 2 is a perspective view of one surface of a sensing busbar assembly according to an embodiment.
FIG. 3 is a perspective view of the other surface of the sensing busbar assembly according to an embodiment.
FIG. 4 is a plan view of one surface of the sensing busbar assembly according to an embodiment.
FIG. 5 is a plan view of the other surface of the sensing busbar assembly according to an embodiment.
FIG. 6 is a front view of the sensing busbar assembly according to an embodiment.
FIG. 7 is a side view of the sensing busbar assembly connected to one end of a battery cell according to an embodiment.
FIG. 8 shows a permeability view of the sensing busbar essay assembly and a conceptual diagram of a stress applied to a jig hole according to an embodiment.
FIGS. 9A and 9B respectively show a distribution view of an amount of deformation and a distribution view of a stress applied to the sensing busbar assembly by a press from a pusher according to an embodiment.

### DETAILED DESCRIPTION OF EMBODIMENTS

Hereinafter, the technical spirit of the present disclosure will be described in more detail with reference to the accompanying drawings. Prior thereto, terms and words used in the present specification and claims are not to be construed as a general or dictionary meaning, and are to be construed as meanings and concepts meeting the technical spirit of the present disclosure based on a principle that the inventors may appropriately define the concepts of terms in order to describe their inventions in best mode.

Therefore, configurations described in the embodiments and accompanying drawings of the present disclosure do not represent all of the technical spirits of the present disclosure, and are merely most preferable embodiments. Therefore, the present disclosure should be construed as including all the changes and substitutions included in the spirit and scope of the present disclosure at the time of filing this application.

Hereinafter, the technical spirit of the present disclosure will be described in more detail with reference to the accompanying drawings. The accompanying drawings are only examples illustrated in order to describe the technical idea of the present disclosure in more detail. Therefore, the technical idea of the present disclosure is not limited to forms of the accompanying drawings.

The present disclosure relates to a housing of a battery module 10, in which the housing with an anti-slip guide structure may prevent a product and a jig from being deformed in a laser welding process between a cell lead and a busbar 140 when manufacturing the battery module 10. The present disclosure may include a housing structure for preventing damage to a cell in a pressing process while maintaining a certain distance between the product and the jig as the jig firmly supports the product in the pressing process of the cell lead from the busbar 140 when the cell lead and the busbar 140 are welded to each other. The present disclosure may secure the improved quality and stable distribution of the laser welding between the cell lead and the busbar 140 by the anti-slip guide structure, and minimize deformation of the jig used in the process, thereby ensuring its process capability.

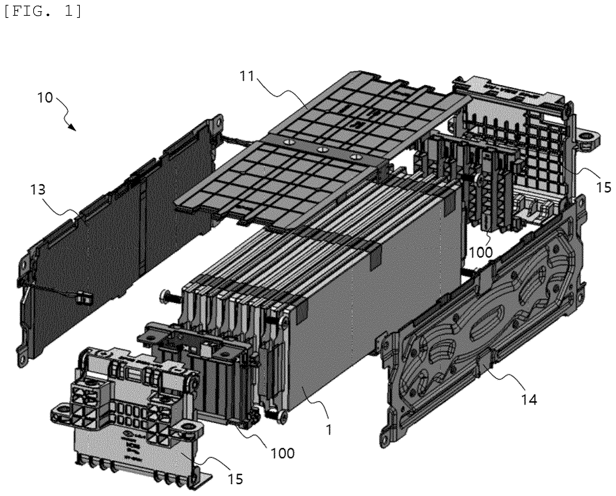

Accordingly, when described with reference to FIG. 1, in the housing of the battery module 10 according to the present disclosure, the housing may include: an upper housing 11, a lower housing 12, a front housing 13, and a rear housing 14, respectively disposed on the upper, lower, front, and rear surfaces of the plurality of battery cells along their peripheries, the battery cells being in surface-contact with each other and arranged in one direction; a pair of side housings 15 each disposed to be adjacent to and surrounding the cell lead protruding from either end of the battery cell 1 in a length direction; and a sensing busbar assembly 100 disposed between the side housing 15 and the cell lead, and connecting the plurality of cell leads to each other, wherein the sensing busbar assembly 100 includes a jig hole 110 into which a jig for supporting the sensing busbar assembly 100 is inserted. Here, the sensing busbar assembly 100 may have a fixed position by the jig supporting the upper and lower ends of the sensing busbar assembly 100, may be brought into close contact with the cell lead by a pusher pressing the sensing busbar assembly 100 toward a surface of the cell lead, and then be coupled to the cell lead by the laser welding performed between the sensing busbar assembly 100 and the cell lead.

The battery module 10 may be a battery assembly in which the plurality of battery cells 1 are loaded in surface-contact with each other in one direction, the plurality of battery cells 1 are electrically connected to each other, and the plurality of battery cells 1 are accommodated in the housing to be protected from an external impact, heat, vibration, or the like. Accordingly, referring to FIG. 1, the battery module 10 of the present disclosure may preferably include the housing protecting the upper, lower, front, and rear surfaces of at least the plurality of battery cells 1 along their peripheries. Accordingly, the battery module 10 may include the upper housing 11 assembled to the upper surface of each of the plurality of battery cells 1, the lower housing 12 assembled to the lower surface of each of the plurality of battery cells 1, the front housing 13 assembled to the front surface of each of the plurality of battery cells 1, and the rear housing 14 assembled to the rear surface of each of the plurality of battery cells 1. Here, the plurality of battery cells 1 may be arranged in surface-contact with each other in one direction. Here, one end and the other end may be the front surface and rear surface of each of the plurality of battery cells 1, and both long ends which may accommodate the plurality of battery cells 1 may respectively be the upper surface and the lower surface each of the plurality of battery cells 1. That is, the front housing 13 or the rear housing 14 may be in contact with the surface of the battery cell 1 disposed at each end, and the upper housing 11 or the lower housing 12 may be in contact with an edge of the battery cell 1 in a thickness direction. It may be preferable that each of the upper housing 11, the lower housing 12, the front housing 13, and the rear housing 14 have appropriate size and shape for accommodating each and every surface to protect a portion of the battery cell 1 that is in contact therewith. Here, the front housing 13 or the rear housing 14 may include a wiring harness or a temperature sensor wiring board on its surface accommodating the battery cell 1.

In addition, when described with reference to FIG. 1, the battery cell 1 may include the cell leads extending from both its ends in the length direction, and the housing of the present disclosure may include the pair of side housings 15 assembled to the respective cell leads at both the ends to protect the surfaces of the cell leads. Each of the side housings 15 may be disposed on the left or right surface of each of the plurality of battery cells 1, except for the upper, lower, front and rear surfaces of each of the plurality of battery cells 1. Based on the front surface of each of the plurality of battery cells 1, one side housing 15 may be assembled to the left surface, and the other side housing 15 may be assembled to the right surface. Here, the pair of side housings 15 may have the same or different shapes based on a part assembled thereto. The side housing 15 may be a housing that accommodates the cell leads and electrical connects the cell leads to each other, and may have a structure that allows electrical connection to the outside from the accommodated cell lead.

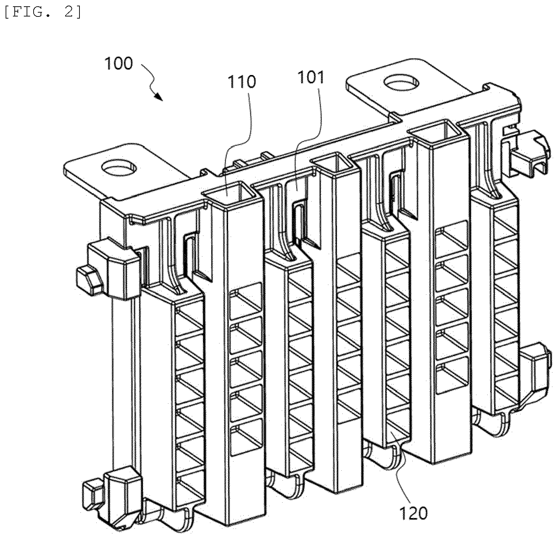

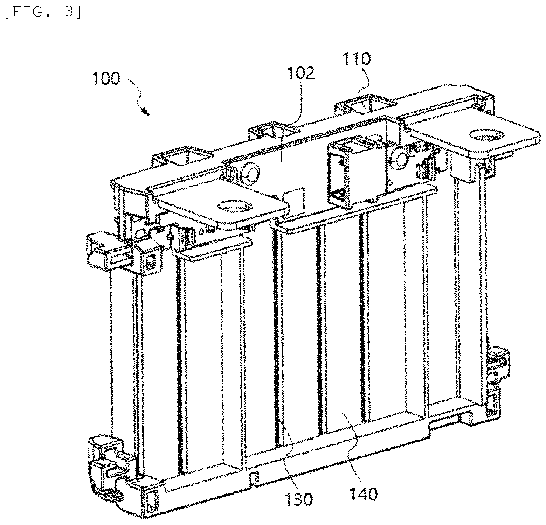

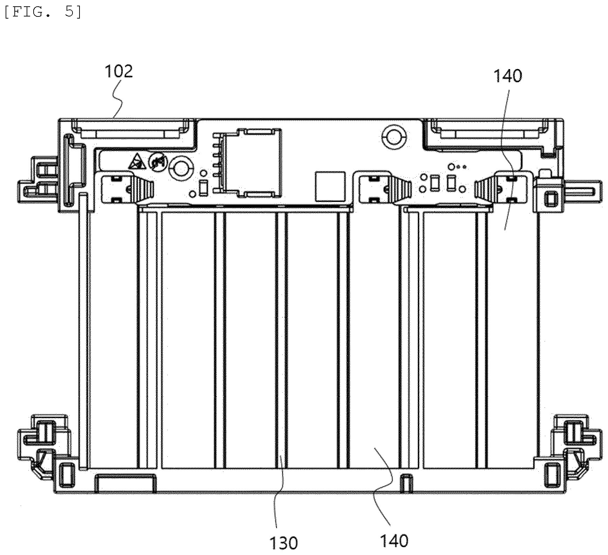

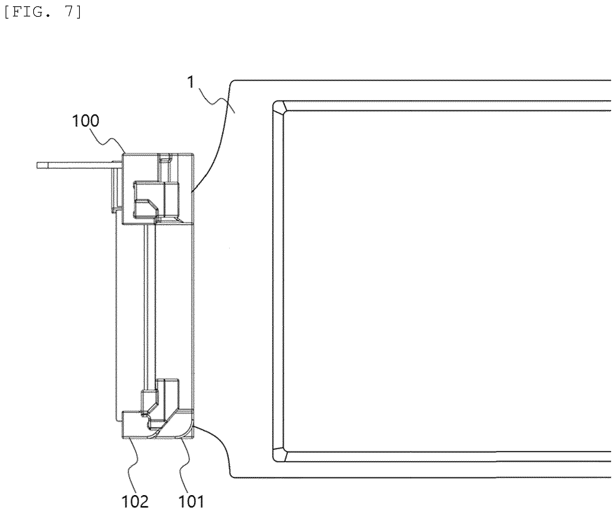

Accordingly, when described with reference to FIG. 1, the present disclosure may include the sensing busbar assembly 100 disposed between the side housing 15 and the plurality of cell leads, and connecting the cell leads with the side housing 15. Referring to FIGS. 2 to 5, the sensing busbar assembly 100 may have one surface 101 which is an injection surface in contact with the cell lead, and the other surface 102 which is configured as a busbar 140 in contact with the side housing 15. The sensing busbar assembly 100 may include a predetermined hole 130 through which the plurality of cell leads may pass, and the cell lead of the battery cell 1 may thus pass through the hole 130, and then perform the electrical connection between each other outside the sensing busbar assembly 100. Accordingly, the plurality of cell leads may be bent toward and be in contact with the busbar 140, and the plurality of cell leads may thus be electrically connected to each other. In addition, as shown in FIG. 7, the sensing busbar assembly 100 and the cell lead may preferably be assembled to each other in close contact with each other.

As shown in FIG. 7, according to the present disclosure, the sensing busbar assembly 100 may be in close contact with the cell lead, and the sensing busbar assembly 100 and the cell lead may then be coupled to each other by the laser welding. In addition, during the laser welding, the pusher may press the sensing busbar assembly 100 toward the cell lead to be brought into close contact with the cell lead, and the welding may then be performed by emitting a laser onto the cell lead. Here, the present disclosure may include the jig hole 110 into which the jig for supporting the sensing busbar assembly 100 is inserted. The jig hole 110 may have a pin or hole structure and have a predetermined depth. Accordingly, the jig may support the sensing busbar assembly 100 as the jig is inserted into the hole 110 to the depth. When the pusher then presses the sensing busbar assembly 100 toward the cell lead, the jig hole may withstand a pressing force of the sensing busbar assembly 100 and fix its position.

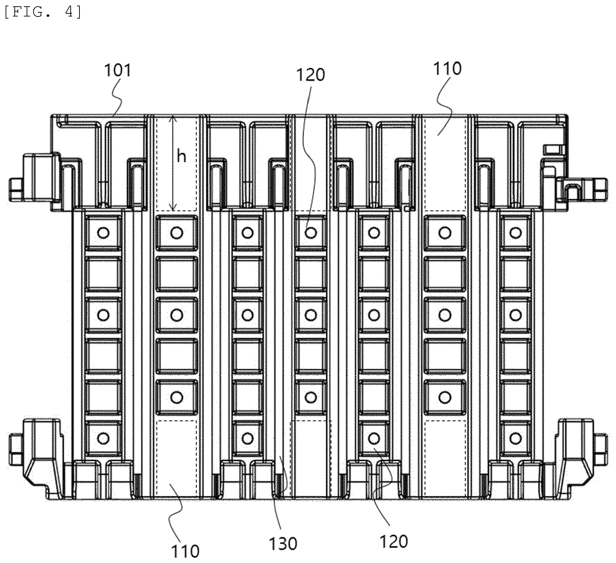

When described in more detail with reference to FIGS. 2 and 4, the sensing busbar assembly 100 of the present disclosure may include the jig hole 110 having a groove formed in the predetermined depth inward from its edge. The jig hole 110 may preferably be formed in the upper or lower end of the sensing busbar assembly 100 by the structure of the battery module 10. In addition, the jig hole 110 may have the depth in a direction parallel to a height of the sensing busbar assembly 100. That is, the jig hole 110 may have a groove whose depth is formed in a vertical direction of the sensing busbar assembly 100. Here, the jig supporting the sensing busbar assembly 100 may support and grip the upper and lower ends of the sensing busbar assembly 100, and serve as a counter bar. In particular, the jig may have a support leg having shape and length corresponding to the groove of the jig hole 110, and the support legs may preferably be disposed to correspond to the number and positions of the jig holes 110. Accordingly, the jig hole 110 may be formed in the sensing busbar assembly 100 to correspond to the number and positions of the support legs. In addition, the depth of the jig hole 110 may correspond to a height of the support leg, and the depth of the jig hole 110 may preferably be smaller than the height of the support leg.

Referring to FIGS. 2 and 4, the plurality of jig holes 110 may be provided in the present disclosure, and at least one jig hole 110 may be provided in each of the upper and lower ends of the sensing busbar assembly 100. Here, the depth of the jig hole 110 formed in the upper end of the sensing busbar assembly 100 and the depth of the jig hole 110 formed in the lower end thereof may be the same as or different from each other, and the sizes of the jig holes 110 may also be the same as or different from each other. In addition, when a larger number of jig holes 110 are formed, the jig holes 110 may be spaced apart from each other by a predetermined distance in a direction vertical to its depth direction. In more detail, the jig gripping the sensing busbar assembly 100 and the jig hole 110 may correspond to each other. When the plurality of the jig holes 110 are respectively provided in the horizontal and vertical directions, the jig holes 110 disposed in the vertical direction may be disposed in the same line. In more detail, when the plurality of jig holes 110 are disposed in the height and width directions of the sensing busbar assembly 100 while being spaced apart from each other by the predetermined distance, the jig holes 110 disposed in the upper and lower ends of the sensing busbar assembly 100 may preferably be aligned in the vertical direction. This configuration may be provided to take into account a structure of the cell lead when the busbar 140, which is one surface of the sensing busbar assembly 100, is in close contact with the cell lead, and to more stably distribute a force and fix the sensing busbar assembly 100 as the support legs of each jig are inserted and supported on the same axis in the vertical direction.

In addition, the jig hole 110 of the present disclosure may be formed in the surface 101 of the sensing busbar assembly 100 that is in contact with the battery cell 1. That is, the jig hole 110 may be formed in the one surface 101, which is an opposite surface of the busbar 140 formed on the other surface 102 of the sensing busbar assembly 100. Therefore, the jig hole 110 may be formed in the surface 101 of the sensing busbar assembly 100 that is in contact with the battery cell 1, and the jig hole 110 may be disposed between the sensing busbar assembly 100 and the battery cell 1.

When described in more detail with reference to FIGS. 2 and 4, the sensing busbar assembly 100 may include a cell lead join part 120 formed on the surface 101 in contact with the battery cell 1, having a length in the vertical direction of the sensing busbar assembly 100, and protruding with a predetermined thickness. The cell lead join part 120 may provide to support the battery cell 1 and fixing its side surface when the plurality of battery cells 1 are stacked and packed into the battery module 10. The cell lead join part 120 may be disposed between the cell leads drawn from the battery cell 1. That is, the cell lead join part 120 may be formed between the hole 130 of the sensing busbar assembly 100 through which the cell lead passes. Therefore, the plurality of cell lead join parts 120 may be disposed in the width direction of the sensing busbar assembly 100, which is a direction corresponding to the direction in which the battery cell 1 is disposed. Accordingly, the cell lead join part 120 may have a predetermined length in the height direction of the sensing busbar assembly 100, protrude with a predetermined thickness "D", and the cell lead join parts 120 may be arranged to be parallel to each other in a direction vertical to the length direction. Here, the length of the cell lead join part 120 may be lower than the height of the sensing busbar assembly 100. The number of cell lead join part 120 may preferably be determined based on the number of battery cells 1. The cell lead join part 120 may have a width corresponding to a distance between the loaded battery cells 1 in surface-contact with each other.

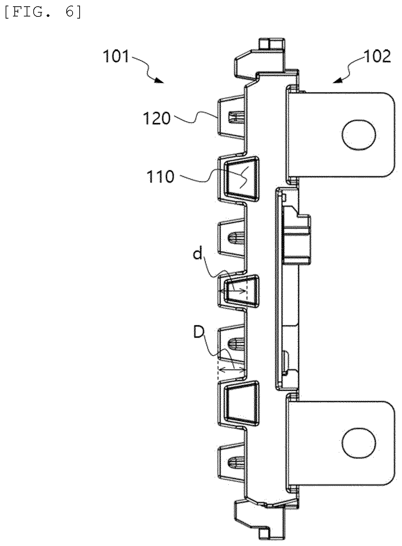

Here, jig hole 110 may protrude with a predetermined thickness "d" in a direction corresponding to a direction in which the cell lead join part 120 protrudes from the sensing busbar assembly 100. In addition, referring to FIGS. 2 and 4, among the plurality of cell lead join parts 120, the jig hole 110 may be disposed in each of the upper and lower ends of the selected cell lead join part 120. That is, among the plurality of cell lead join parts 120 each having a length smaller than that of the sensing busbar assembly 100, the jig hole 110 may be disposed in each of the two ends of the selected cell lead join part 120. Here, the selected cell lead join parts 120 may be alternating cell lead join parts 120. That is, the jig hole 110 may be formed in each of the upper and lower ends of the cell lead join parts 120 disposed alternately with each other among the plurality of cell lead join parts 120 disposed to be parallel to each other. In addition, an end of the jig hole 110 may preferably correspond to that of the sensing busbar assembly 100. Accordingly, in each of the two ends of the sensing busbar assembly 100, an empty space is formed in which all the jig holes 110 each having the predetermined depth may be accommodated within the height of the sensing busbar assembly 100, and the depth of the jig hole 110 may be disposed in the space while being exposed to the outside. In addition, referring to FIG. 6, in order for the sensing busbar assembly 100 to be stably coupled to the plurality of battery cells 1, in the sensing busbar assembly 100, the protrusion thickness "D" of the cell lead joint part 120 protruding from the surface 101 of the sensing busbar assembly 100 and the protrusion thickness "d" of the jig hole 110 may be the same as each other.

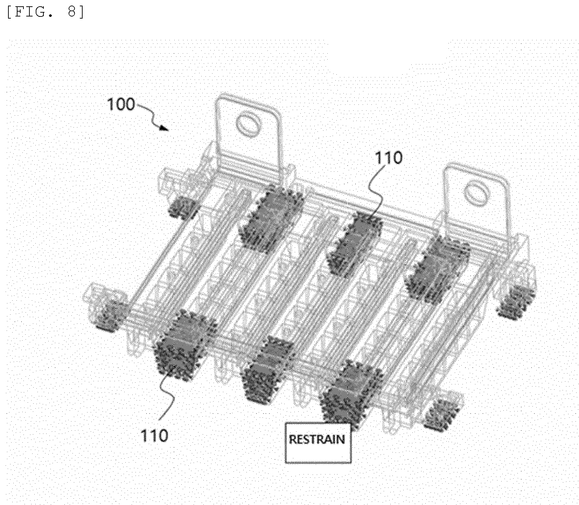

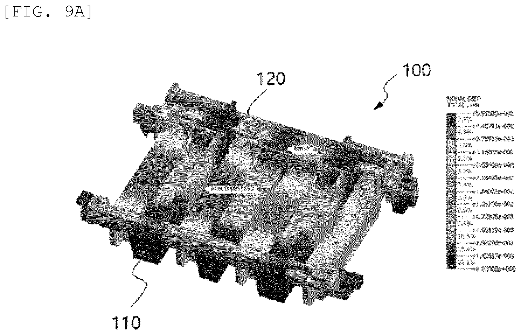

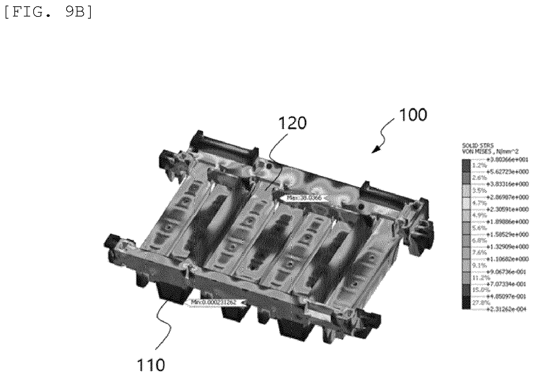

Therefore, the sensing busbar assembly 100 according to the present disclosure may secure the predetermined distance between the battery cell 1 and the sensing busbar assembly 100 by the jig hole 110 protruding toward a part of the sensing busbar assembly 100 that joins the cell lead, thus requiring no separate counter bar, and ensuring the easy operation and an improved welding quality during the welding, while preventing poor durability due to a residual stress. In addition, the jig hole 110, which is free from interference of a cell wing folding part that occurs in the upper end of the battery module 10, may also be disposed in the upper end of the sensing busbar assembly 100. Therefore, the jig may firmly support the upper and lower ends of each sensing busbar assembly 100, and the pusher may thus press the battery cell 1, thereby preventing slips of the product and the jig. As shown in FIG. 8, the legs of each jig may be restrained in each jig hole 110. Accordingly, as shown in FIGS. 9A and 9B, when the pusher presses the sensing busbar assembly 100, an amount of deformation applied thereto may be reduced, and the stress may be distributed. In addition, the jig leg may support the pressing force while being directly inserted into the jig hole 110, and thus may withstand the pressing force applied to the jig. Therefore, jig deformation may be minimized, and costs may then be reduced by increasing a jig replacement cycle.

As set forth above, the battery module with the anti-slip guide structure according to the present disclosure configured as described above may use the structure for preventing its product and jig from being deformed when welding the cell lead of the battery module, thus securing the improved welding quality and the stable dispersion, reducing the damage that may be inflicted on the battery cell due to the slip phenomenon, improving the process accuracy and stability by the guide shape to thus improve the process capability, and also increasing the jig replacement cycle to thus lower the cost.

Hereinabove, although the present disclosure has been described by specific matters such as the detailed components, the embodiments and the accompanying drawings, which are provided only for assisting in comprehensive understanding of the present disclosure. Therefore, the present disclosure is not limited to the embodiments, and various modifications and changes may be made by those skilled in the art to which the present disclosure pertains from this description.

Therefore, the spirit of the present disclosure should not be limited to these embodiments, and the following claims and all of modifications equal or equivalent to the claims are intended to fall within the scope and spirit of the present disclosure.

## Claims

1. A battery module housing comprising:
an upper housing, a lower housing, a front housing, and a rear housing, respectively disposed on upper, lower, front, and rear surfaces of a plurality of battery cells along peripheries thereof, the battery cells being in surface-contact with each other and arranged in one direction;
a pair of side housings each disposed to be adjacent to and surrounding a cell lead protruding from either end of each battery cell in a length direction; and
a sensing busbar assembly disposed between the side housings and the cell leads, and connecting the plurality of cell leads to each other,
wherein the sensing busbar assembly includes a jig hole into which a jig for supporting the sensing busbar assembly is configured to be inserted.

2. The housing of claim 1, wherein the jig hole has a predetermined depth formed in a direction parallel to a height of the sensing busbar assembly.

3. The housing of claim 1 or 2, wherein a depth of the jig hole corresponds to or is smaller than a height of a support leg of the jig.

4. The housing of any one of claims 1 to 3,
wherein a plurality of jig holes are provided, and
wherein among the plurality of jig holes, at least one jig hole is formed in each of upper and lower ends of the sensing busbar assembly, and the jig holes are spaced apart from each other by a predetermined distance in a direction vertical to a depth direction of the jig holes.

5. The housing of claim 4, wherein among the plurality of jig holes, predetermined jig holes disposed in each of the upper and lower ends of the sensing busbar assembly are aligned in the vertical direction.

6. The housing of any one of claims 1 to 5,
wherein the jig hole is formed in a surface of the sensing busbar assembly that is in contact with the battery cells, and the jig hole is disposed between the sensing busbar assembly and the battery cells.

7. The housing of any one of claims 1 to 6, wherein the jig hole is formed in a surface of the sensing busbar assembly that is in contact with the battery cells, and the jig hole is formed in a direction perpendicular to a longitudinal direction of the battery cells.

8. The housing of any one of claims 1 to 7, wherein the sensing busbar assembly includes a plurality of cell lead join parts arranged to be parallel to each other in a direction vertical to the length direction, each cell lead join part being formed on a surface of the sensing busbar assembly that is in contact with the battery cells, having a predetermined length in a height direction of the sensing busbar assembly, and in surface-contact with a surface of the cell lead by protruding with a predetermined thickness.

9. The housing of claim 8, wherein a length of the cell lead join parts is lower than a height of the sensing busbar assembly.

10. The housing of claim 8 or 9, wherein the jig hole protrudes with a predetermined thickness in a direction corresponding to a direction in which the cell lead join parts protrude from the sensing busbar assembly.

11. The housing of claim 10, wherein the jig hole is disposed in each of upper and lower ends of a selected cell lead join part.

12. The housing of claim 10 or 11, wherein in the sensing busbar assembly, a protrusion thickness of the cell lead join parts protruding from the surface of the sensing busbar assembly and a protrusion thickness of the jig hole are a same as each other.

13. The housing of any one of claims 10 to 12, wherein the jig hole is disposed in each of upper and lower ends of the cell lead join parts disposed alternately with each other among the plurality of cell lead join parts.
